# EUROPEAN PATENT SPECIFICATION

(11) **EP 3 861 221 B1**
(45) Date of publication and mention of the grant of the patent: **02.07.2025**
(21) Application number: 19795645.1
(22) Date of filing: 01.10.2019
(51) Int. Cl.: F16B 23/00, F16B 37/12

(54) **BUSH WITH QUICK-SCREWING ACTION**
SCHNELLSCHRAUBBUCHSE
DOUILLE À VISSAGE RAPIDE

(30) Priority: 04.10.2018 IT 201800009166
(43) Date of publication of application: 11.08.2021
(73) Proprietor: F.LLI MAURI S.p.A., 23852 Garlate (LC) (IT)
(72) Inventor: MAURI, Luca, 23852 Garlate (LC) (IT)
(74) Representative: Raimondi, Margherita
(86) International application number: PCT/IB2019/058331
(87) International publication number: WO 2020/070638

(56) References cited:
- EP-A1- 3 056 747
- WO-A1-2012/146283
- CA-A1- 2 934 361
- DE-A1- 2 251 115
- DE-U1- 202014 005 833
- FR-A- 1 009 061
- GB-A- 883 564
- US-A1- 2006 013 671

## Description

The present invention relates to a bush with a quick-screwing action.

It is known in the technical sector of metal fittings that there exists the need to provide metal bushes with an internal threading designed to allow the joining together of parts, such as panels and the like which must be fastened in various ways.

CA 2 934 361 A1 and DE 20 2014 005833 U1 disclose a bush according to the preamble of Claim 1.

Although effective, the known bushes nevertheless have functional drawbacks arising from their form which results in a slow speed of insertion and a limited tensile strength, said drawback constituting a major defect in particular if the bushes are inserted in low-density and/or small-thickness materials.

The technical problem which is posed, therefore, is that of providing a bush which overcomes, or at least limits, the aforementioned technical drawbacks. In connection with this problem it is also required that the bush should have small dimensions, be easy and inexpensive to produce and be able to be easily installed very rapidly using normal standardized means.

These results are obtained according to the present invention by a bush according to the characteristic features of Claim 1.

Further details may be obtained from the following description of a non-limiting example of embodiment of the subject of the present invention provided with reference to the attached drawings in which:

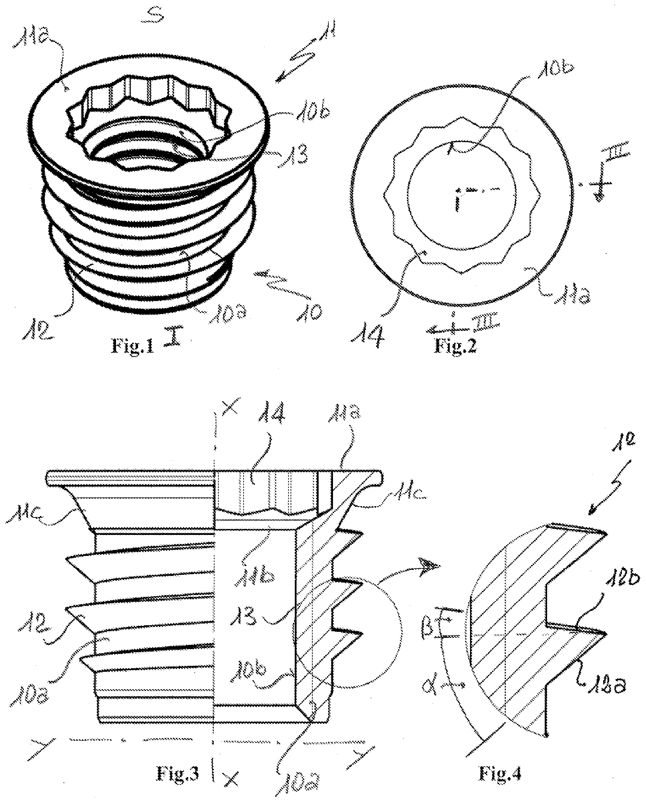

Figure 1: shows a perspective view of a bush according to the present invention;
Figure 2: shows a top plan view of the bush according to Fig. 1;
Figure 3: shows a half-view/half cross-section along the plane indicated by III-III in Fig. 2;
Figure 4: shows a cross-section of the enlarged detail of the threading of the bush according to the invention.

As shown and assuming solely for the sake of easier description without any limiting meaning a pair of reference axes extending respectively in a longitudinal direction X-X, coinciding for convenience with the axis of the bush, and transverse/radial direction Y-Y perpendicular to the first direction, as well as a top part "S" corresponding to the operating part of the bush and a bottom part "I" opposite to the top part, an example of a bush according to the invention comprises:
- a substantially cylindrical hollow body 10 with a top end face integral with:
- a substantially frustoconical hollow head 11 with an outer larger base 11a, comprising an annular edge 11b, and a smaller base 11b connected to the cylindrical body 10 by a crown 11c inclined towards the axis of the bush body;
- a threading 12 formed on the outer side surface 10a of the body 10;
- a female thread 13 formed on the inner side surface 10b of the body 10.

The frustoconical head 11 had an inner cavity with a polygonal profile 14. Preferably the polygonal profile is obtained by means of the superimposition of two hexagons, the second one of which is rotated through a predefined angle, preferably of between 25° and 35°, and more preferably 30°, relative to the first one; this allows easier screwing for insertion of the bush, which may be performed using both a special spanner and a standard hex key.

Furthermore, the bush is provided with:
- an outer threading 12 with an asymmetrical profile, defined by a wide angle α of inclination of the bottom side of the thread relative to a plane parallel to the transverse direction Y-Y and a small angle β of inclination of the top side of the thread relative to a plane parallel to the transverse direction Y-Y.

The thread 12 has an asymmetrical profile with:
-- an angle α of inclination of the bottom side of the thread relative to a plane parallel to the transverse direction Y-Y ranging between 38°and 42°; and
-- an angle β of inclination of the top side of the thread relative to a plane parallel to the transverse direction Y-Y ranging between 5.5° and 8°.

The wide angle α of the bottom profile allows fast and easier screwing of the bush which may be synergically combined with the polygonal profile of the head, while the small upper angle β results in an increased resistance to axial forces of extraction of the bush, which is particularly useful for low-density materials.

The Applicant has surprisingly discovered that the speed and ease of screwing may be improved in particular by an angle α of between 38°and 42°, which in combination with an angle β of inclination of between 5.5° and 8°, also allows the resistive force of the bush to be maintained once the bush is mounted. The asymmetrical profile described above therefore results in a bush which offers maximum ease of screwing together with an excellent resistance to the axial extraction forces.

The cylindrical body generally has an axial length of between 8.5 mm and 12, preferably between 9 mm and 10.5 mm.

Preferably the bush is made of metal with a low carbon content.

Preferably, the bush is produced by means of a low-cost rolling operation.

It is therefore clear how the particular characteristics of the form and threading of the bush according to the invention are such as to allow fast screwing thereof, a high extraction resistance and therefore high resistance also in panels with a small thickness and/or low material density, as well as a high mechanical resistance to deformation.

In addition to the above, the bush according to the invention gives rise to further advantages: the particular angles of the sides of the threading allow in fact insertion also by means of pressure instead of by screwing; moreover, the particular frustoconical form of the head with a polygonal operating surface allows coplanar insertion of the bush inside the panel without the need for prior counterboring of the material, since the counterbore is in fact automatically formed during insertion.

Although described in connection with a number of embodiments and a number of preferred examples of implementation of the invention, it is understood that the scope of protection of the present patent is determined solely by the claims below.

## Claims

1. Bush comprising:
- a substantially cylindrical hollow body (10);
- a substantially frustoconical hollow head (11) with an outer larger base (11a) and smaller base (11b) connected to the cylindrical body (10) by a crown (11c) inclined towards the longitudinal axis (X-X) of the bush body (10);
- a threading (12) formed on the outer side surface (10a) of the body (10), the threading having a top side and a bottom side of the thread;
- a female thread (13) formed on the inner side surface (10b) of the body (10); the frustoconical head (11) having an inner cavity with a polygonal annular profile designed to form an operating surface shaped for coupling with a corresponding tightening spanner,
**characterized in that** the threading (12) has an asymmetrical profile defined by a wider angle (α) of inclination of the bottom side of the thread relative to a plane parallel to the transverse direction (Y-Y) and orthogonal to the longitudinal axis (X-X), and a smaller angle (β) of inclination of the top side of the thread relative to said plane, and **in that** said threading has a bottom side of the thread forming an angle (α) of inclination of between 38° and 42° relative to said plane and a top side of the thread forming an angle (β) of between 5.5° and 8° relative to said plane.

2. Bush according to Claim 1, **characterized in that** the polygonal profile of the inner cavity of the frustoconical head (11) is obtained by the superimposition of two hexagons, the second one of which is rotated through an angle of between 25° and 35° relative to the first one, preferably through an angle of 30°.

3. Bush according to any one of the preceding claims, **characterized in that** it is made of metal with a low carbon content.

4. Bush according to any one of the preceding claims, **characterized in that** it is obtained by means of rolling.

## Patentansprüche

1. Buchse, umfassend:
- einen im Wesentlichen zylindrischen Hohlkörper (10);
- einen im wesentlichen kegelstumpfförmigen Hohlkopf (11) mit einer äußeren größeren Basis (11a) und einer kleineren Basis (11b), der mit dem zylindrischen Körper (10) durch eine Krone (11c) verbunden ist, die in Richtung der Längsachse (X-X) des Buchsenkörpers (10) geneigt ist;
- eine Gewindeanordnung (12), die auf der äußeren Seitenfläche (10a) des Körpers (10) ausgebildet ist, wobei die Gewindeanordnung eine Oberseite und eine Unterseite des Gewindes aufweist;
- ein Innengewinde (13), das auf der inneren Seitenfläche (10b) des Körpers (10) ausgebildet ist;
wobei der kegelstumpfförmige Kopf (11) einen inneren Hohlraum mit einem Polygonringprofil aufweist, das so ausgelegt ist, dass es eine Arbeitsfläche bildet, die für das Koppeln mit einem entsprechenden Spannschlüssel geformt ist,
**dadurch gekennzeichnet, dass** die Gewindeanordnung (12) ein asymmetrisches Profil aufweist, das durch einen größeren Neigungswinkel (α) der Unterseite des Gewindes relativ zu einer Ebene parallel zur Querrichtung (Y-Y) und orthogonal zur Längsachse (X-X) und einen kleineren Neigungswinkel (β) der Oberseite des Gewindes in Bezug auf die Ebene definiert ist, und dadurch, dass die Gewindeanordnung eine Unterseite des Gewindes aufweist, die einen Neigungswinkel (α) zwischen 38° und 42° in Bezug auf die Ebene bildet, und eine Oberseite des Gewindes aufweist, die einen Winkel (β) zwischen 5,5° und 8° relativ zu der Ebene ausbildet.

2. Buchse nach Anspruch 1, **dadurch gekennzeichnet, dass** das Polygonprofil des inneren Hohlraums des kegelstumpfförmigen Kopfes (11) durch die Überlagerung von zwei Sechsecken erhalten wird, von denen das zweite um einen Winkel zwischen 25° und 35°, bevorzugt um einen Winkel von 30°, gegenüber dem ersten gedreht wird.

3. Buchse nach einem der vorhergehenden Ansprüche, **dadurch gekennzeichnet, dass** sie aus Metall mit einem niedrigen Kohlenstoffgehalt gebildet ist.

4. Buchse nach einem der vorhergehenden Ansprüche, **dadurch gekennzeichnet, dass** sie mittels Walzen erhalten wird.

## Revendications

1. Douille comprenant :
- un corps creux sensiblement cylindrique (10) ;
- une tête creuse sensiblement tronconique (11) avec une base extérieure plus grande (11a) et une base plus petite (11b) reliée au corps cylindrique (10) par une couronne (11c) inclinée vers l'axe longitudinal (X-X) du corps de la douille (10) ;
- un filetage (12) formé sur la surface latérale extérieure (10a) du corps (10), le filetage présentant une face supérieure et une face inférieure de filetage ;
- un filetage femelle (13) formé sur la surface latérale intérieure (10b) du corps (10); la tête tronconique (11) comportant une cavité intérieure avec un profil annulaire polygonal conçue pour former une surface de travail conformée pour l'accouplement avec une clé de serrage correspondante.
**caractérisée en ce que** le filetage (12) présente un profil asymétrique défini par un grand angle (α) d'inclinaison de la face inférieure de filetage par rapport à un plan parallèle à une direction transversale (Y-Y) et orthogonale à l'axe longitudinal (X-X), et un petit angle (β) d'inclinaison de la face supérieure de filetage par rapport audit plan, et **en ce que** ledit filetage a une face inférieure de filetage formant un angle (α) d'inclinaison compris entre 38° et 42° par rapport audit plan et une face supérieure de filetage formant un angle (β) compris entre 5,5° et 8° par rapport audit plan.

2. Douille selon la revendication 1, **caractérisée en ce que** le profil polygonal de la cavité intérieure de la tête tronconique (11) est obtenu par la superposition de deux hexagones dont le second est tourné d'un angle compris entre 25° et 35° par rapport au premier, de préférence d'un angle de 30°.

3. Douille selon l'une quelconque des revendications précédentes, **caractérisée en ce qu'**elle est réalisée en métal à faible teneur en carbone.

4. Douille selon l'une quelconque des revendications précédentes, **caractérisée en ce qu'**elle est obtenue par laminage.
